# FASCICULE DE BREVET EUROPEEN

(11) **EP 1 763 445 B1**
(45) Date de publication et mention de la délivrance du brevet: **22.02.2012**
(21) Numéro de dépôt: 05783804.7
(22) Date de dépôt: 24.06.2005
(51) Int. Cl.: B60J 7/14

(54) **TOIT RIGIDE PLIABLE**
ZUSAMMENKLAPPBARES STARRES DACH
COLLAPSIBLE RIGID ROOF

(30) Priorité: 02.07.2004 FR 0407416; 06.01.2005 FR 0500108
(43) Date de publication de la demande: 21.03.2007
(73) Titulaire: HEULIEZ SAS, 79140 Cerizay (FR)
(72) Inventeur: QUEVEAU, Gérard, F-79140 Le Pin (FR); QUEVEAU, Paul, F-79140 Montravers (FR); GUILLEZ, Jean-Marc, F-79140 Cirières (FR)
(74) Mandataire: Novagraaf Technologies
(86) Numéro de dépôt international: PCT/FR2005/001609
(87) Numéro de publication internationale: WO 2006/013249

(56) Documents cités:
- FR-A- 2 839 021
- US-A- 3 575 464
- US-A1- 2002 125 733
- US-A1- 2002 175 536
- US-A1- 2003 011 208
- US-A1- 2004 004 369
- US-A1- 2004 051 342

## Description

La présente invention se rapporte à un toit rigide pliable pour véhicule automobile. comme décrit dans le préambule de la revendication 1. un toit tel est connu de US 2004/0004369.

On connaît un toit rigide pliable du type mobile entre une position déployée dans laquelle il recouvre l'habitacle du véhicule, et une position pliée dans laquelle il est rangé dans le coffre arrière du véhicule, le toit comprenant une partie avant de toit, un élément central arrière articulé à la partie avant de toit et au bâti structurel du véhicule, et deux éléments latéraux arrières qui définissent entre eux un logement adapté à recevoir l'élément central arrière et qui sont montés mobiles par rapport à l'élément central arrière entre une position d'utilisation dans laquelle l'élément central arrière est dans le logement, le toit étant dans sa position déployée, et une position de rangement dans laquelle l'élément central arrière est disposé au-dessus du logement et au-dessous de la partie avant de toit, le toit étant dans sa position pliée, le toit comprenant des moyens d'entraînement et de guidage avant qui sont adaptés à déplacer les éléments latéraux arrières par rapport à l'élément central arrière quand la partie avant de toit est déplacée par rapport à l'élément central arrière.

Un tel toit, décrit par exemple dans la demande de brevet FR 2 805 218, présente l'avantage de laisser une hauteur de coffre importante quand le toit est plié. En effet, l'élément central arrière qui présente une épaisseur relativement mince sur l'ensemble de sa surface, est désolidarisé des éléments latéraux arrières. Or chaque élément latéral arrière présente une dimension relativement importante dans la direction longitudinale du véhicule quand le toit est dans sa position déployée, et cette dimension se trouve orientée sensiblement verticalement quand le toit est dans sa position pliée. Du fait de la désolidarisation de l'élément central arrière est décalé vers le haut par rapport aux éléments latéraux arrières grâce aux moyens d'entraînement et de guidage avant, ce qui permet donc d'augmenter la hauteur utile du coffre sous l'élément central arrière quand le toit est plié.

La présente invention vise à proposer un toit alternatif dont le fonctionnement est plus fiable du point de vue de son fonctionnement, à faciliter son intégration dans un véhicule, et à réduire son coût.

Selon l'invention, les moyens d'entraînement et de guidage avant sont formés par deux bielles latérales, chaque bielle étant montée en rotation, d'une part, à la partie avant de toit, et, d'autre part, à un moyen de déplacement qui est adapté à déplacer l'élément latéral arrière correspondant par rapport à l'élément central arrière.

De ce fait, les moyens d'entraînement et de guidage avant font partie intégrante du toit et n'ont pas de point de contact avec des éléments extérieurs au toit (comme, par exemple, le bâti structurel du véhicule), ce qui simplifie le montage du toit sur le bâti structurel. Par ailleurs les éléments moyens d'entraînement et de guidage avant sont particulièrement simples.

D'autres particularité et avantages apparaîtront dans la description de deux modes de réalisation donnés à titre d'exemple non limitatif et illustrés par les dessins mis en annexe.
La figure 1 est une vue en coupe du toit conforme à un premier mode de réalisation de la présente invention, le toit étant dans sa position déployée recouvrant l'habitacle du véhicule,
La figure 2 est une vue en coupe du toit conforme au premier mode de réalisation de la présente invention, le toit étant en cours de rangement,
La figure 3 est une vue en coupe du toit conforme au premier mode de réalisation de la présente invention, le toit étant dans sa position pliée rangée dans le coffre arrière du véhicule,
La figure 4 est une vue agrandie de la partie de la figure 2 illustrant la liaison entre la partie avant de toit et la partie arrière,
La figure 5 est une vue similaire à la figure 1 d'un toit conforme à un second mode de réalisation de la présente invention,
La figure 6 est une vue similaire à la figure 2 d'un toit conforme au second mode de réalisation de la présente invention,
La figure 7 est une vue similaire à la figure 3 d'un toit conforme au second mode de réalisation de la présente invention,
La figure 8 est une vue similaire à la figure 4 d'un toit conforme au second mode de réalisation de la présente invention, et
La figure 9 est une vue similaire à la figure 8 représentant les trajectoires relatives de différents axes lors du déplacement du toit.

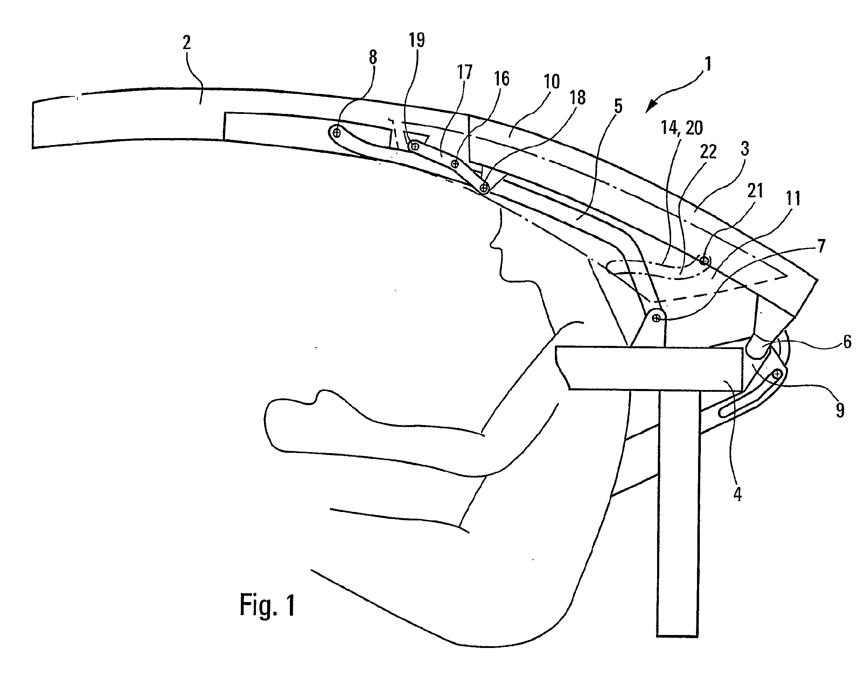

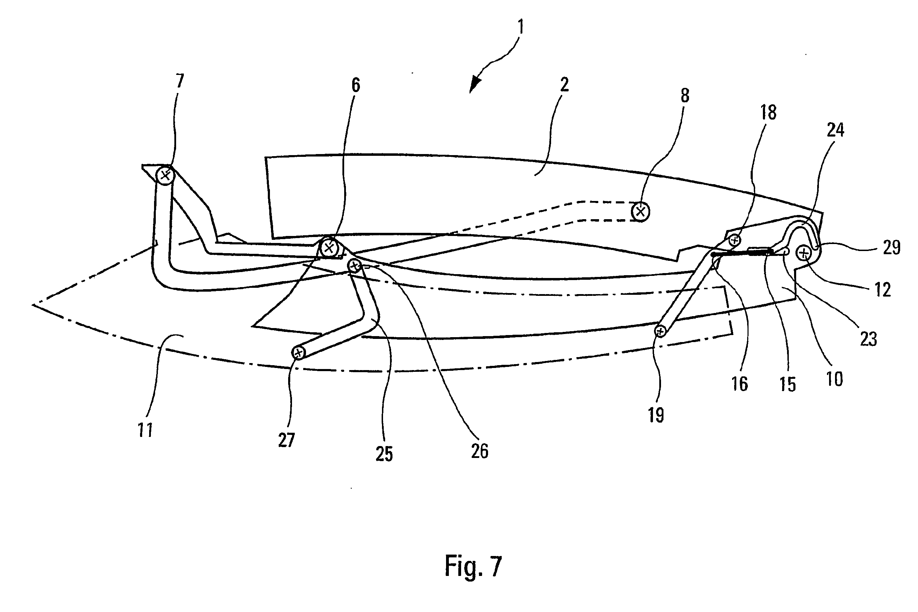

Comme on peut le voir aux figures 1 à 3 et 5 à 7, le toit rigide pliable 1 d'un véhicule comprend une partie avant de toit 2 et une partie arrière de toit 3. La partie arrière de toit 3 est articulée, par son extrémité avant, à la partie avant de toit 2, et, par son extrémité arrière, au bâti structurel 4 du véhicule. De façon connu, des organes de déplacement 5,6 sont adaptés à entraîner le toit 1 entre une position déployée dans laquelle il recouvre l'habitacle du véhicule, et une position pliée dans laquelle il est rangé dans le coffre arrière du véhicule, la partie avant de toit 2 étant disposée au-dessus de la partie arrière de toit 3.

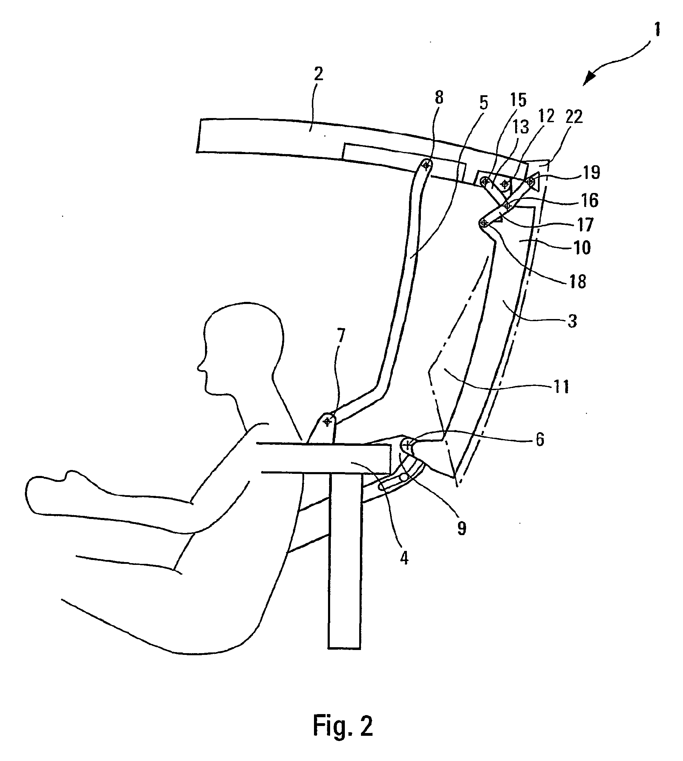

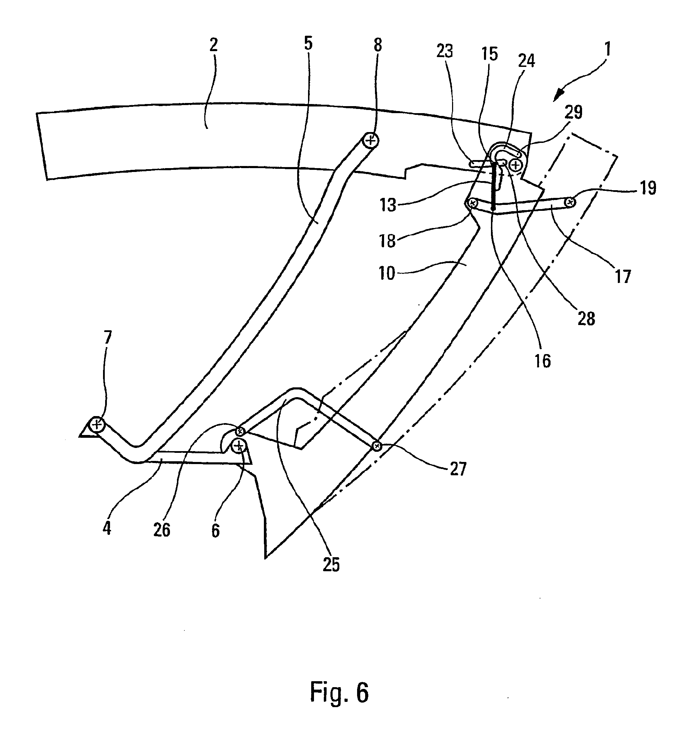

Comme on peut le voir aux figures 2 et 6, les organes de déplacement 5,6 comprennent deux bras 5 latéraux, chaque bras 5 étant monté pivotant d'une part, par rapport au bâti structurel 4 selon un premier axe de rotation 7 s'étendant selon la direction transversale du véhicule, et, d'autre part, à la partie avant de toit 2 (et plus précisément près du bord arrière de la partie avant de toit 2) selon un second axe de rotation 8 s'étendant selon la direction transversale du véhicule.

Comme on peut le voir aux figures 1, 2, 5 et 6, les organes de déplacement 5,6 comprennent également un arbre d'entraînement 6 qui s'étend selon la direction transversale du véhicule. L'arbre d'entraînement est solidarisé à la partie arrière de toit 3 (et plus précisément près du bord arrière de la partie arrière de toit 3) et est monté rotatif dans des paliers 9 portés par le bâti structurel 4, réalisant l'articulation entre le bâti structurel 4 et la partie arrière de toit 3.

La partie arrière de toit 3 comporte un élément central 10 et deux éléments latéraux 11 qui définissent entre eux un logement adapté à recevoir l'élément central 10.

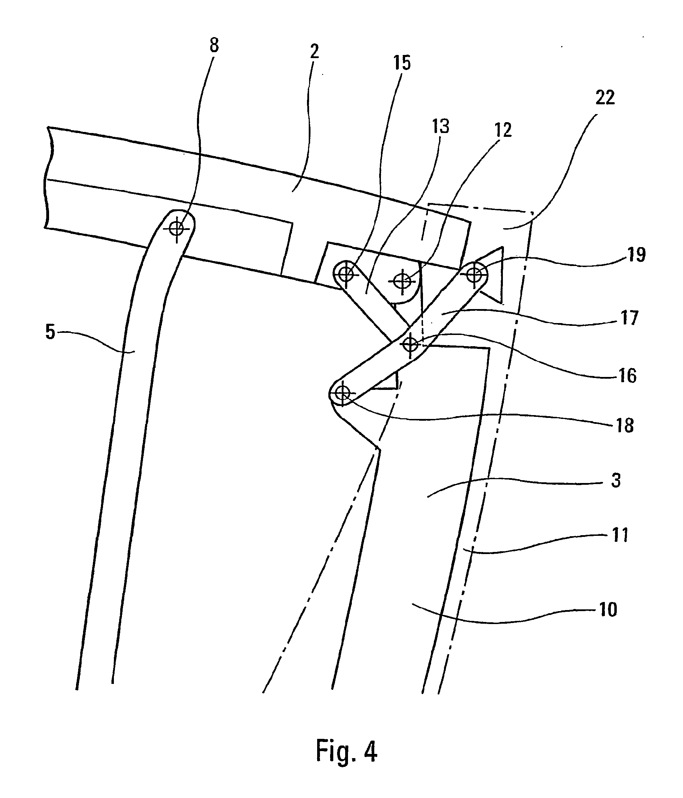

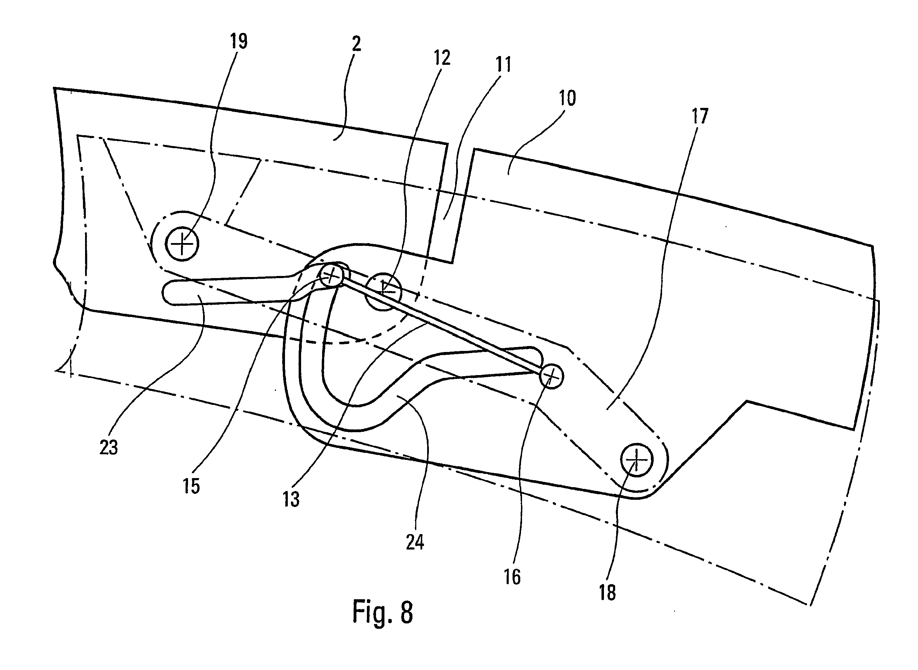

Comme on peut le voir aux figures 4, 8 et 9, l'élément central 10 (par son bord avant) est monté rotatif par rapport à la partie avant de toit 2 selon un axe de liaison 12 s'étendant selon la direction transversale du véhicule, l'axe de liaison 12 étant situé en arrière du second axe de rotation 8. Les éléments latéraux 11 sont sans contact direct avec la partie avant de toit 2. En outre, l'arbre d'entraînement 6 est solidarisé à l'élément central 10 (et plus précisément à son bord arrière), les éléments latéraux étant sans contact direct avec le bâti structurel 4.

Les éléments latéraux 11 sont montés mobiles par rapport à l'élément central 10 entre une position d'utilisation dans laquelle l'élément central 10 est dans le logement, le toit 1 étant dans sa position déployée, et une position de rangement dans laquelle la totalité de l'élément central 10 est disposée au-dessus du logement, le toit étant dans sa position pliée. A cet effet, le toit 1 comprend des moyens d'entraînement et de guidage avant 13 et arrière 14 adaptés à permettre le déplacement des éléments latéraux 11 par rapport à l'élément central 10 quand la partie avant de toit 2 est déplacée par rapport à l'élément central 10. Ces moyens d'entraînement et de guidage avant 13 et arrière 14 font intégralement partie du toit 1 : ils ne sont en contact ni avec le bâti structurel 4, ni avec les organes de déplacement 6,7.

Les moyens d'entraînement et de guidage avant 13 sont reliés d'une part à la partie avant de toit 2 (et plus précisément au bord arrière de la partie avant de toit 2), et, d'autre part, à la partie arrière de toit 3 (et plus précisément au bord avant de la partie arrière de toit 3).

Comme on peut le voir aux figures 4, 8 et 9, les moyens d'entraînement et de guidage avant 13 sont formés par deux bielles 13 disposés de chaque côté du toit 1. Chaque bielle 13 étant montée en rotation, d'une part, par rapport à la partie avant de toit 2 selon un premier axe de pivotement 15 qui s'étend selon la direction transversale du véhicule, et, d'autre part, selon un second axe de pivotement 16 qui s'étend selon la direction transversale du véhicule, par rapport à un moyen de déplacement 17 qui est adapté à déplacer l'élément latéral 11 correspondant par rapport à l'élément central 10. Comme on peut le voir aux figures 4, 8 et 9, chaque bielle 13 est reliée directement à la partie avant de toit 2 et au moyen de déplacement 17.

Dans les présents modes de réalisation, le premier axe de pivotement 15 est disposé en arrière du second axe de rotation 8, et en avant de l'axe de liaison 12.

Par ailleurs, dans les présents modes de réalisation, chaque moyen de déplacement 17 est formé par une tige de liaison 17 qui est montée en rotation, d'une part, par rapport à l'élément central 10 (et plus précisément, par rapport au bord avant de l'élément central 10) selon un troisième axe de pivotement 18 qui s'étend selon la direction transversale du véhicule, et, d'autre part, à l'élément latéral 11 correspondant (et plus précisément, par rapport au bord avant de l'élément latéral 11) selon un quatrième axe de pivotement 19 qui s'étend selon la direction transversale du véhicule. Comme on peut le voir aux figures 4, 8 et 9, chaque tige 17 est reliée directement à l'élément central 10 et à l'élément latéral 11 correspondant.

Dans les présents modes de réalisation, pour chaque tige de liaison 17, le second axe de pivotement 16 par lequel la tige de liaison 17 est reliée à la bielle 13 correspondante est situé entre les troisième et quatrième axes de pivotement 18,19 par lesquels la tige de liaison 17 est reliée aux éléments central 10 et latéral 11 correspondant.

Les moyens d'entraînement et de guidage arrière 14 sont intégrés dans la partie arrière de toit 3 (et plus précisément dans le bord arrière de la partie arrière de toit 3). Les moyens d'entraînement et de guidage arrière 14 sont reliés, d'une part, à l'élément central 10 (et plus précisément dans le bord arrière de l'élément central 10), et, d'autre part, aux éléments latéraux 11 (et plus précisément dans le bord arrière des éléments latéraux 11).

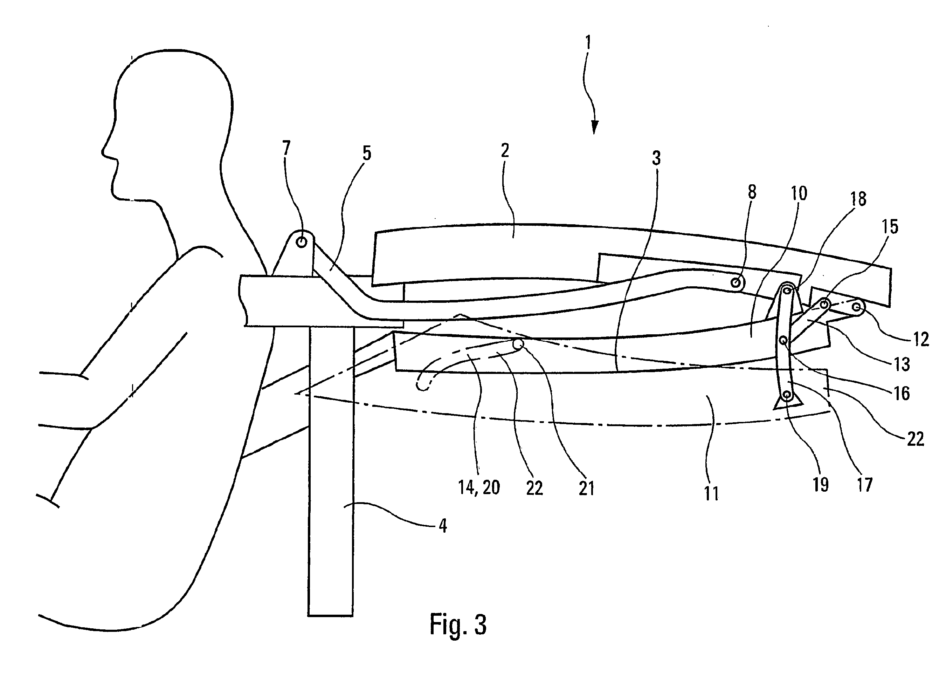

Dans le premier mode de réalisation, comme on peut le voir aux figures 1 et 3, le premier axe de pivotement 15 est fixe dans la partie avant de toit 2, et les moyens d'entraînement et de guidage arrière 14 sont formés par deux systèmes latéraux à glissière 20. Dans le présent mode de réalisation, chaque système à glissière 20 est formé par un pion 21 qui est solidaire de l'élément central 10 et qui est monté coulissant le long d'une glissière 22 solidarisée à l'élément latéral 11 correspondant.

Chaque glissière 22 est réalisée dans la partie basse de l'élément latéral 11 correspondant et s'étend sensiblement selon la direction longitudinale du véhicule, le toit 1 étant dans sa position déployée. Chaque glissière 22 s'étend également légèrement selon la direction verticale quand le toit 1 est dans sa position déployée, de manière à avoir une forme selon laquelle, quand le toit 1 est dans sa position déployée, sa partie médiane s'étend sensiblement horizontalement, son extrémité avant est courbée vers le bas, et son extrémité arrière est courbée vers le haut.

En fonctionnement, quand les organes de déplacement 5,6 sont activés, ils entraînent le déplacement de la partie avant de toit 2 et l'élément central 10, l'axe de l'arbre d'entraînement 6, les premier et second axes de rotation 7,8 et l'axe de liaison 12 formant un premier parallélogramme 6,7,8,12 déformable. Le déplacement de l'élément central 10 par rapport à la partie avant de toit 2 entraîne le déplacement des bielles 13 et des tiges de liaison 17, l'axe de liaison 12, les premier, second et troisième axes de pivotement 15,16,18 formant un second parallélogramme 12,15,16,18 déformable. Le déplacement des tiges de liaison 16 entraîne celui des éléments latéraux du fait de leur liaison par l'intermédiaire du quatrième axe de pivotement 19 et des systèmes à glissière 20.

Au début de l'ouverture du toit 1, la configuration du second parallélogramme 12,15,16,18 permet de pousser les éléments latéraux 11 dans une direction sensiblement perpendiculaire à la surface du l'élément central 10. Dé ce fait, les joints qui sont disposés entre l'élément central 10 et les éléments latéraux 11 ne subissent principalement qu'un aplatissement, les frottements dans le sens longitudinal étant fortement diminués. Cette configuration du second parallélogramme 12,15,16,18 permet donc de réduire l'usure de ces joints et d'améliorer leur étanchéité dans le le temps.

La forme des glissières 22 permet de guider la fin du mouvement de rangement des éléments latéraux 11. Cette forme permet, d'une part, de contourner les formes proéminentes situées dans le coffre tel que les passages de roues, le tuyau de remplissage du réservoir ou encore le support d'amortisseur, et, d'autre part, grâce à la poussée de la bielle 13 vers l'avant (cf. la figure 3), de guider les éléments latéraux 11 vers l'avant dans le coffre, ce qui permet de libérer de l'espace à l'arrière du coffre, par exemple pour placer les feux arrière. Il est possible d'avoir des glissières 22 ayant des profils différents selon le côté du véhicule afin de donner un mouvement relatif propre à chaque élément latéral 11, en fonction des diverses formes proéminentes qui se trouvent à proximité de sa trajectoire.

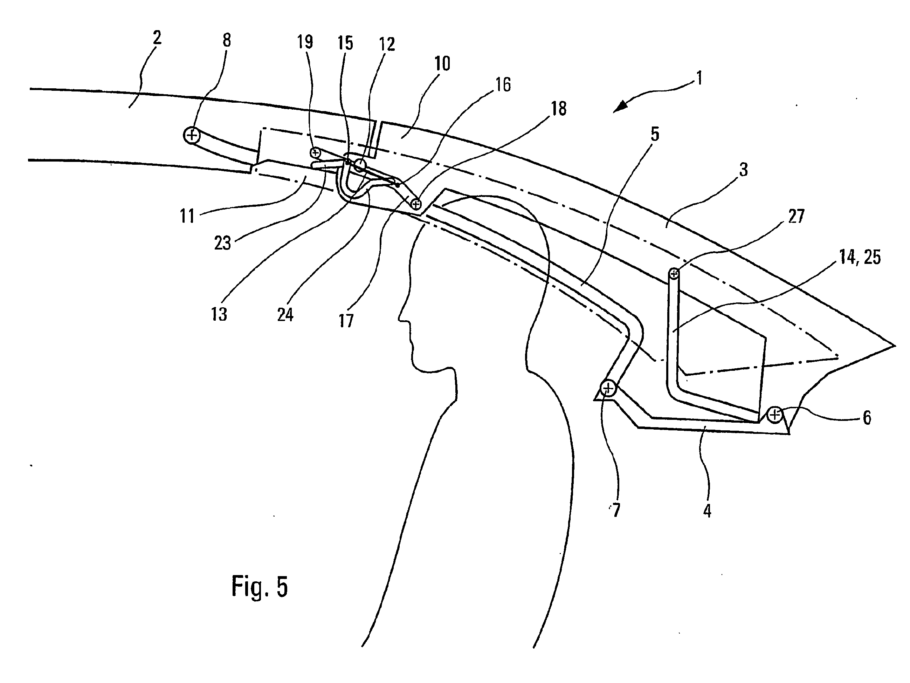

Dans le second mode de réalisation, comme on peut le voir aux figures 5 et 6, le premier axe de pivotement 15 est monté mobile dans la partie avant de toit 2, celle-ci et l'élément central 10 comportant des moyens d'asservissement 23,24 adaptés à définir le déplacement du premier axe de pivotement 15 en fonction du déplacement de la partie avant de toit 2 par rapport à l'élément central 10. Les moyens d'entraînement et de guidage arrière 14 sont formés par des tiges arrières 25.

Chaque tige arrière 25 est montée en rotation, d'une part, par rapport à l'élément central 10 (et plus précisément, par rapport au bord arrière de l'élément central 10 quand le toit 1 est dans sa position déployée) selon un premier axe arrière 26 qui s'étend selon la direction transversale du véhicule, et, d'autre part, à l'élément latéral 11 correspondant (et plus précisément, par rapport au bord arrière de l'élément latéral 11 quand le toit 1 est dans sa position déployée) selon un second axe arrière 27 qui s'étend selon la direction transversale du véhicule.

Dans le second mode de réalisation, les moyens d'asservissement 23,24 sont formés, d'une part, par une glissière avant 23 réalisée dans la partie avant de toit 2 (plus précisément à proximité du bord arrière de la partie avant de toit 2 et de l'axe de liaison 12), et, d'autre part, par une glissière centrale 24 réalisée dans l'élément central 10 (plus précisément à proximité du bord avant de l'élément central 10 et de l'axe de liaison 12), le premier axe de pivotement 15 étant emprisonné dans les deux glissières 23,24. De façon à permettre le déplacement de l'élément central 10 par rapport à la partie avant de toit 2, chaque glissière 23,24 s'étend sur un secteur angulaire centré sur l'axe de liaison 12 dont l'amplitude permet le mouvement du toit 1.

Dans le second mode de réalisation, lors du déplacement du toit 1, la partie avant de toit 2 et l'élément central 10 pivotent l'un par rapport à l'autre autour de l'axe de liaison 12 selon un angle d'environ 180°, le secteur angulaire S1 défini par la glissière avant 23 s'étendant sur environ 20° et celui S2 défini par la glissière centrale 24 s'étendant sur environ 180°.

La forme de chaque glissière 23,24 permet de connaître la position du premier axe de pivotement 15 pour toute position du toit 1. Les distances entre le second axe de pivotement 16 et, d'une part, le premier axe de pivotement 15, et, d'autre part, le troisième axe de pivotement 18, étant fixées, les trajectoires du premier axe de pivotement 15 (définies par les glissières 23,24) et du troisième axe de pivotement 18 (un arc de cercle centré sur l'axe de liaison 12) étant connues, celle du second axe de pivotement 16 l'est également. Et comme la tige de liaison 17 est indéformable, la trajectoire du quatrième axe de pivotement 19 est également connue.

Ainsi, selon le second mode de réalisation, il est particulièrement aisé de déterminer la trajectoire du quatrième axe de pivotement 19 par rapport à l'axe de liaison 12, et donc celle des éléments latéraux 11 par rapport à l'élément central 10. De ce fait, il est possible d'avoir un déplacement relatif des éléments latéraux 11 le plus adapté possible au véhicule, ce mouvement dépendant du profil des deux glissières 23,24. Il est également possible d'avoir des glissières 23,24 ayant des profils différents selon le côté du véhicule afin de donner un mouvement relatif propre à chaque élément latéral 11, en fonction des diverses formes proéminentes qui se trouvent à proximité de sa trajectoire.

Dans le second mode de réalisation, la glissière avant 23 a une forme relativement rectiligne avec un décrochement brusque à proximité d'une première extrémité correspondant à la position déployée du toit 1, la glissière centrale 24 ayant la forme générale d'un point d'interrogation.

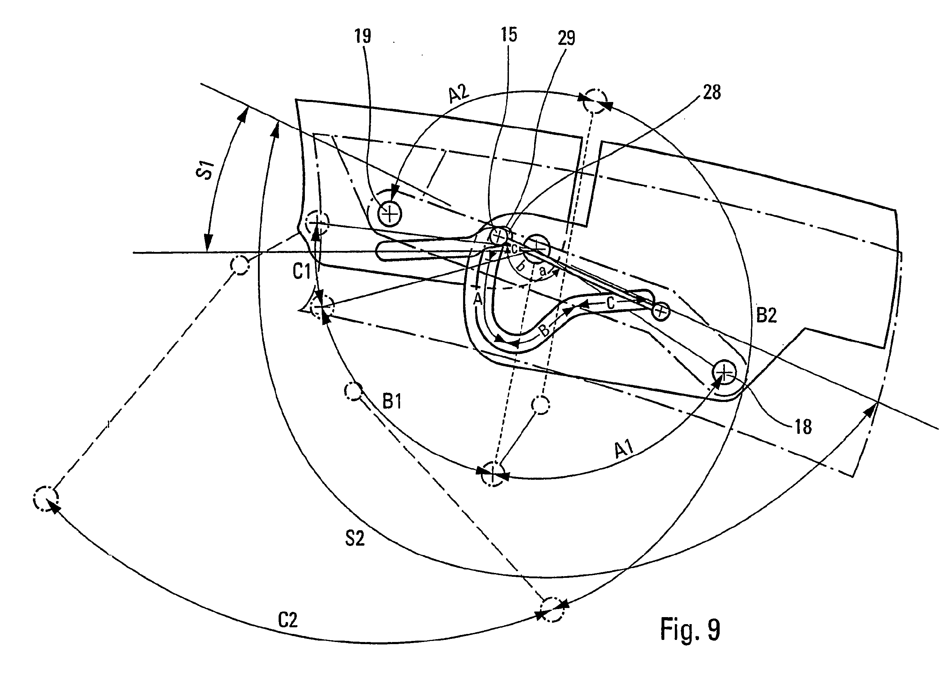

Afin de comprendre la cinématique de déplacement du quatrième axe de pivotement 19, il est préférable de considérer que la partie avant de toit 2 est immobile, les trajectoires respectives du troisième axe de pivotement 18 et de la glissière centrale 24 étant alors des arcs de cercle centrés sur l'axe de liaison 12 s'étendant sur environ un demi-tour (figure 9).

Quand le toit 1 est dans sa position déployée, le premier axe de pivotement 15 est à l'extrémité de déploiement 28 de la glissière avant 23 et à l'extrémité de déploiement 29 de la glissière centrale 24.

Quand le toit 1 se déploie, pivotent autour de l'axe de liaison 12, d'une part le troisième axe de pivotement 18 ce qui entraîne le déplacement de la tige 17, et, d'autre part la glissière centrale 24 ce qui entraîne le déplacement radial et/ou angulaire du premier axe de pivotement 15 qui est emprisonné au point de croisement des deux glissières 23,24.

La cinématique lors du pliage du toit 1 peut être expliquée ainsi :

Dés le début de la première phase du pliage (après quelques degrés de déplacement angulaire de l'élément central 24 par rapport à la partie avant de toit 2), le premier axe de pivotement 15 parcours une faible portion de la glissière centrale 10 correspondant aux quelques degrés parcourus, et subit de ce fait un déplacement radial suffisamment important pour se déplacer dans la glissière avant 23 et y parcourir le décrochement. Ainsi, les profils respectifs des deux glissières 23,24 à proximité de leur extrémité de déploiement respective 28,29 permet d'imposer au quatrième axe de pivotement 19 (et donc à l'ensemble des éléments latéraux 11) un mouvement de dégagement par rapport à l'élément central 10 dans une direction sensiblement perpendiculaire à la surface de ce dernier (représenté à la figure 9 par le fait que le quatrième axe de pivotement 19 a initialement un mouvement vertical), ce qui permet de limiter les frottements longitudinaux subis par les joints d'étanchéité disposés au niveau du logement de l'élément central 10. Dans la suite de la première phase du pliage, le quatrième axe de pivotement 19 subit un léger mouvement de sorte que les éléments latéraux 11 coulissent légèrement le long de l'élément central 10 en direction de son bord arrière. Pendant cette première phase du pliage, le déplacement angulaire de l'élément central 10 par rapport à la partie avant de toit 2 est important (environ 100°), le premier axe de pivotement 15 parcourant une première portion A de la glissière centrale 24, le troisième axe de pivotement 18 parcourant un arc de cercle A1 dont l'amplitude correspond à celui de la première portion A, et le quatrième axe de pivotement parcours un arc A2.

Dans une seconde phase de pliage, le déplacement angulaire de l'élément central 10 par rapport à la partie avant de toit 2 est également important (environ 60°), le premier axe de pivotement 15 parcours une seconde portion B de la glissière centrale 24, le troisième axe de pivotement 18 parcours un arc de cercle B1 dont l'amplitude correspond à celui de la seconde portion B. La forme de la seconde portion B fait que, pendant ce déplacement angulaire, le premier axe de pivotement 15 subit un déplacement radial important lors duquel il se rapproche de l'axe de liaison 12 (en direction de l'extrémité arrière de l'élément avant 2). Les premier et troisième axes de pivotement 15,18 ont des mouvements respectifs générant, autour du troisième axe de pivotement 18, un mouvement important (environ 45°) de rotation du second axe de pivotement 16 (et donc de l'ensemble de la tige 17). Le parcours du quatrième axe de pivotement 19 qui en découle est l'arc de spire B2. Dans la portion finale de la portion B, le quatrième axe de pivotement 19 subit un mouvement de poussée correspondant à un coulissement des éléments latéraux 11 le long de l'élément central 10, en direction du bord arrière de l'élément central (en direction de l'avant du véhicule, le toit étant quasiment dans sa position pliée rangée). Ce mouvement permet aux éléments latéraux 11 (et plus précisément à leur bord avant) de contourner des dispositifs tels que les feux arrières.

Dans une troisième phase de pliage, le déplacement angulaire de l'élément central 10 par rapport à la partie avant de toit 2 est peu important (environ 15°), le premier axe de pivotement 15 parcours une troisième portion C de la glissière centrale 24, le troisième axe de pivotement 18 parcours un arc de cercle C1 dont l'amplitude correspond à celui de la troisième portion C. La forme de la troisième portion C fait que, pendant ce faible déplacement angulaire, le premier axe de pivotement 15 subit un déplacement radial important lors duquel il s'éloigne de l'axe de liaison 12 (en direction du bord avant de l'élément avant de toit 2). Les premier et troisième axes de pivotement 15,18 ont des mouvements respectifs générant, autour du troisième axe de pivotement 18, un mouvement important (environ 60°) de rotation du second axe de pivotement 16 (et donc de l'ensemble de la tige de liaison 17). Le parcours du quatrième axe de pivotement 19 est l'arc de spire C2 aplati. Dans cette portion C, le quatrième axe de pivotement 19 subit un mouvement de poussée correspondant à un coulissement important de l'élément latéral 11 le long de l'élément central 10 en direction du bord arrière de ce dernier (en direction de l'avant du véhicule). Ce mouvement permet aux éléments latéraux 11 de se loger le plus profondément vers l'avant du coffre de façon à libérer un maximum d'espace au niveau de l'extrémité arrière de celui-ci.

## Revendications

1. Toit (1) rigide pliable d'un véhicule automobile, le toit (1) étant mobile entre une position déployée dans laquelle il recouvre l'habitacle du véhicule, et une position pliée dans laquelle il est rangé dans le coffre arrière du véhicule, le toit (1) comprenant, d'une part, une partie avant (2) qui est montée pivotante de chaque côté à un bras latéral (5) relié de façon pivotante au bâti structurel (4) du véhicule, et, d'autre part, une partie arrière (3) qui est articulée à la partie avant de toit (2) et au bâti structurel (4) du véhicule, et qui comporte un élément central arrière (10) par lequel elle est articulée à la partie avant de toit (2) et au bâti structurel (4), et deux éléments latéraux arrières (11) qui définissent entre eux un logement adapté à recevoir l'élément central arrière (10) et qui sont montés mobiles par rapport à l'élément central arrière (10) entre une position d'utilisation dans laquelle l'élément central arrière (10) est dans le logement, le toit (1) étant dans sa position déployée, et une position de rangement dans laquelle l'élément central arrière (10) est disposé au-dessus du logement et au-dessous de la partie avant de toit (2), le toit (1) étant dans sa position pliée, le toit (1) comprenant des moyens d'entraînement et de guidage avant (13) qui sont adaptés à déplacer les éléments latéraux arrières (11) par rapport à l'élément central arrière (10) quand la partie avant de toit (2) est déplacée par rapport à l'élément central arrière (10), **caractérisé en ce que** les moyens d'entraînement et de guidage avant (13) sont formés par deux bielles (13) latérales, chaque bielle (13) étant montée en rotation, d'une part, à la partie avant de toit (12) et, d'autre part, à un moyen de déplacement (17) qui est adapté à déplacer l'élément latéral arrière (11) correspondant par rapport à l'élément central arrière (10).

2. Toit (1) selon la revendication 1, **caractérisé en ce que** chaque moyen de déplacement (17) est formé par une tige de liaison (17) qui est montée en rotation, d'une part, à l'élément central arrière (10) et, d'autre part, à l'élément latéral arrière (11) correspondant.

3. Toit (1) selon la revendication 2, **caractérisé en ce que**, pour chaque tige de liaison (17), le point de liaison (16) de la tige de liaison (17) à la bielle (13) correspondante est situé entre les points de liaison (18,19) par lesquels la tige de liaison (17) est reliée aux éléments central arrière (10) et latéral arrière (11) correspondant.

4. Toit (1) selon la revendication 2 ou 3, **caractérisé en ce que** l'axe de pivotement (15) par lequel la tige de liaison (17) est articulée à l'élément avant (2) est immobile par rapport à la partie avant (2).

5. Toit (1) selon la revendication 2 ou 3, **caractérisé en ce que** l'axe de pivotement (15) par lequel la tige de liaison (17) est articulée à l'élément avant (2) est monté mobile dans la partie avant (2), les éléments avant (2) et central (10) comportant des moyens d'asservissement (23,24) adaptés à définir le déplacement de l'axe de pivotement (15) en fonction du déplacement de l'élément avant (2) par rapport à l'élément central (10).

6. Toit (1) selon la revendication 5, **caractérisé en ce que** les moyens d'asservissement (23,24) sont formés d'une part, par une glissière avant (23) réalisée dans l'élément avant de toit (2), et, d'autre part, par une glissière centrale (24) réalisée dans l'élément central (10), dans lesquelles est emprisonné l'axe de pivotement (15).

7. Toit (1) selon la revendication 6, **caractérisé en ce que** les glissières (23,24) sont conformées de façon à entraîner le déplacement radial et/ou angulaire de l'axe de pivotement (15) qui est emprisonné à leur point de croisement.

8. Toit (1) selon l'une des revendications 1 à 7, **caractérisé en ce qu'**il comprend des moyens d'entraînement et de guidage arrière (14) qui sont reliés, d'une part, à l'élément central arrière (10) et, d'autre part, aux éléments latéraux arrières (11).

9. Toit (1) selon la revendication 8, **caractérisé en ce que** les moyens d'entraînement et de guidage arrière (14) sont formés par deux systèmes latéraux à glissière (14).

10. Toit (1) selon la revendication 9, **caractérisé en ce que** chaque système de glissière (14) est formé par un pion (20) qui est solidaire de l'élément central arrière (10) et qui est monté coulissant le long d'une glissière (21) solidarisée à l'élément latéral arrière (11) correspondant.

11. Toit (1) selon la revendication 10, **caractérisé en ce que** chaque glissière (21) s'étend sensiblement selon la direction longitudinale du véhicule quand le toit (1) est dans sa position déployée.

12. Toit (1) selon la revendication 11, **caractérisé en ce que** chaque glissière (21) s'étend également selon la direction verticale quand le toit (1) est dans sa position déployée, de manière à avoir une forme selon laquelle, quand le toit (1) est dans sa position déployée, la partie médiane s'étend sensiblement horizontalement, l'extrémité avant est courbée vers le bas, et l'extrémité arrière est courbée vers le haut.

13. Toit (1) selon la revendication 8, **caractérisé en ce que** les moyens d'entraînement et de guidage arrière (14) sont formés par deux tiges arrières (25), chaque tige arrière (25) étant montée en rotation, d'une part, à un élément latéral (11), et, d'autre part, à l'élément central (10).

14. Toit (1) selon la revendication 8, **caractérisé en ce que** les moyens d'entraînement et de guidage avant (13) ou les moyens d'entraînement et de guidage arrière (14) comprennent des glissières (22,23,24) conformées de façon à guider le déplacement des éléments latéraux (11) par rapport à l'élément central (10).

15. Toit (1) selon la revendication 14, **caractérisé en ce que** les glissières (22,23,24) adaptées à guider le déplacement d'un des éléments latéraux (11) sont conformées différemment des glissières (22,23,24) adaptées à guider le déplacement de l'autre des éléments latéraux (11).

## Claims

1. Collapsible rigid roof (1) of a motor vehicle, the roof (1) being movable between a deployed position in which it covers the passenger compartment of the vehicle, and a folded position in which it is stowed in the rear boot of the vehicle, the roof (1) including, on one hand, a front part (2) which is pivotably mounted on each side to a lateral arm (5) pivotably connected to the structural frame (4) of the vehicle, and, on the other hand, a rear part (3) which is articulated with respect to the roof front part (2) and to the structural frame (4) of the vehicle, and which includes a rear central element (10) by which it is articulated with respect to the roof front part (2) and to the structural frame (4), and two rear lateral elements (11) which define therebetween a housing designed to receive the rear central element (10) and which are mounted movably in relation to the rear central element (10) between a usage position in which the rear central element (10) is disposed in the housing, the roof (1) being in its deployed position, and a stowed position in which the rear central element (10) is disposed above the housing and below the front roof part (2), the roof (1) being in its folded position, the roof (1) including front actuating and guiding means (13) which are designed to move the rear lateral elements (11) in relation to the rear central element (10) when the front roof part (2) is moved relative to the rear central element (10), **characterised in that** the front actuating and guiding means (13) are formed by two lateral connecting rods (13), each connecting rod (13) being rotatably mounted, on one hand, to the front roof part (12) and, on the other hand, to a means of displacement (17) which is designed to move the corresponding rear lateral element (11) relative to the rear central element (10).

2. Roof (1) according to claim 1, **characterised in that** each means of displacement (17) is formed by a tie bar (17) which is rotatably mounted, on one hand, to the rear central element (10) and, on the other hand, to the corresponding rear lateral element (11).

3. Roof (1) according to claim 2, **characterised in that**, for each tie bar (17), the point of connection (16) of the tie bar (17) to the corresponding connecting rod (13) is situated between the connecting points (18, 19) by which the tie bar (17) is connected to the corresponding rear central element (10) and rear lateral element (11).

4. Roof (1) according to claim 2 or 3, **characterised in that** the pivot axis (15) by which the tie bar (17) is hinged to the front element (2) is immobile relative to the front part (2).

5. Roof (1) according to claim 2 or 3, **characterised in that** the pivot axis (15) by which the tie bar (17) is hinged to the front element (2) is mounted movably in the front part (2), the front element (2) and central element (10) including control means (23, 24) designed to define the movement of the pivot axis (15) in relation to the movement of the front element (2) with respect to the central element (10).

6. Roof (1) according to claim 5, **characterised in that** the control means (23, 24) are formed, on one hand, by a front slide (23) incorporated in the front roof part (2) and, on the other hand, by a central slide (24) incorporated in the central element (10), wherein the pivot axis (15) is captive.

7. Roof (1) according to claim 6, **characterised in that** the slides (23, 24) are configured so as to cause the radial and/or angular movement of the pivot axis (15) which is captive at the point of intersection thereof.

8. Roof according to any one of claims 1 to 7, **characterised in that** it includes rear actuating and guiding means (14) which are connected, on one hand, to the rear central element (10) and, on the other hand, to the rear lateral elements (11).

9. Roof (1) according to claim 8, **characterised in that** the rear actuating and guiding means (14) are formed by two lateral slide systems (14).

10. Roof (1) according to claim 9, **characterised in that** each slide system (14) is formed by a pin (20) which is integral with the rear central element (10) and which is slidably mounted along a slide (21) integral with the corresponding rear lateral element (11).

11. Roof (1) according to claim 10, **characterised in that** each slide (21) extends substantially in the lengthwise direction of the vehicle when the roof (1) is in its deployed position.

12. Roof (1) according to claim 11, **characterised in that** each slide (21) also extends in the vertical direction when the roof (1) is in its deployed position, so as to have a form in which, when the roof (1) is in its deployed position, the median portion extends substantially horizontally, the forward end is curved downwardly and the rearward end is curved upwardly.

13. Roof (1) according to claim 8, **characterised in that** the rear actuating and guiding means (14) are formed by two rear rods (25), each rear rod (25) being mounted rotatably, on one hand, to a lateral element (11) and, on the other hand, to the central element (10).

14. Roof (1) according to claim 8, **characterised in that** the front actuating and guiding means (13) or the rear actuating and guiding means (14) include slides (22, 23, 24) configured so as to guide the movement of the lateral elements (11) relative to the central element (10).

15. Roof (1) according to claim 14, **characterised in that** the slides (22, 23, 24) designed to guide the movement of one of the lateral elements (11) are configured differently from the slides (22, 23, 24) designed to guide the movement of the other of the lateral elements (11).

## Patentansprüche

1. Steifes, faltbares Dach (1) eines Kraftfahrzeugs, wobei das Dach (1) zwischen einer entfalteten Position, in welcher dieses den Fahrgastraum des Fahrzeugs abdeckt, und einer gefalteten Position, in welcher dieses im heckseitigen Kofferraum des Fahrzeugs verstaut ist verschiebbar ist, wobei das Dach (1) aufweist einerseits einen vorderen Bereich (2), der an jeder Seite mit einem Seitenarm (5) schwenkbar angebracht ist, welcher schwenkend mit dem Strukturrahmen (4) des Fahrzeugs verbunden ist, und andererseits einen hinteren Bereich (3), der an dem vorderen Bereich des Dachs (2) und an dem Strukturrahmen (4) des Fahrzeugs angelenkt ist, und der ein hinteres Zentralelement (10) umfasst, durch welches dieser an dem vorderen Bereich des Dachs (2) und am Strukturrahmen (4) angelenkt ist, und zwei hintere Seitenelemente (11), die zwischen sich eine Aufnahme bilden, die so ausgebildet ist, dass diese das hintere Zentralelement (10) aufnehmen kann, und die zwischen einer Benutzungsposition, in welcher sich das hintere Zentralelement (10) in der Aufnahme befindet, wobei das Dach (1) sich in seiner entfalteten Position befindet, und einer Verstauposition, in welcher das hintere Zentralelement (10) oberhalb der Aufnahme und unterhalb des vorderen Bereichs des Dachs (2) angeordnet ist, wobei das Dach (1) in seiner gefalteten Position ist, wobei das Dach (1) vordere Mittel zum Antrieb und zur Führung (13) aufweist, die so ausgebildet sind, dass diese die hinteren Seitenelemente (11) in Bezug zu dem hinteren Zentralelement (10) verschieben, wenn der vordere Bereich des Dachs (2) in Bezug zu dem hinteren Zentralelement (10) verschoben ist, **dadurch gekennzeichnet, dass** die vorderen Mittel zum Antrieb und zur Führung (13) durch zwei seitliche Verbindungsstangen (13) gebildet werden, wobei jede Verbindungsstange (13) drehbar einerseits an dem vorderen Bereich des Dachs (12) und andererseits an einem Verschiebungsmittel (17) montiert ist, das so ausgebildet ist, dass dieses das korrespondierende hintere Seitenelement (11) in Bezug zu dem hinteren Zentralelement (10) verschiebt.

2. Dach (1) nach Anspruch 1, **dadurch gekennzeichnet, dass** jedes Verschiebungsmittel (17) durch einen Verbindungsstab (17) gebildet ist, der drehbar einerseits an dem hinteren Zentralelement (10) und andererseits an dem korrespondierenden hinteren Seitenelement (11) angebracht ist.

3. Dach (1) nach Anspruch 2, **dadurch gekennzeichnet, dass** für jeden Verbindungsstab (17) der Verbindungspunkt (16) des Verbindungsstabes (17) mit der korrespondierenden Verbindungsstange (13) zwischen den Verbindungspunkten (18, 19) liegt, durch welche der Verbindungsstab (17) mit den korrespondierenden hinteren Zentralelementen (10) und hinteren Seitenelementen (11) verbunden ist.

4. Dach (1) nach Anspruch 2 oder 3, **dadurch gekennzeichnet, dass** die Schwenkachse (15), durch welche der Verbindungsstab (17) an dem vorderen Element (2) angelenkt ist, in Bezug zu dem vorderen Bereich (2) unbeweglich ist.

5. Dach (1) nach Anspruch 2 oder 3, **dadurch gekennzeichnet, dass** die Schwenkachse (15), durch welche der Verbindungsstab (17) an das vordere Element (2) angelenkt ist, in dem vorderen Bereich (2) beweglich angebracht ist, wobei die vorderen (2) und zentralen (10) Elemente Steuereinrichtungen (23, 24) aufweisen, die so ausgebildet sind, dass diese die Verschiebung der Schwenkachse (15) in Abhängigkeit von der Verschiebung des vorderen Elements (2) in Bezug dem zentralen Element (10) bestimmen.

6. Dach (1) nach Anspruch 5, **dadurch gekennzeichnet, dass** die Steuereinrichtungen (23, 24) einerseits durch eine vordere Schiene (23), die in dem vorderen Dachelement (2) ausgebildet ist, und andererseits durch eine zentrale Schiene (24), die in dem zentralen Element (10) ausgebildet ist, gebildet werden, in welchen die Schwenkachse (15) gefangen ist.

7. Dach (1) nach Anspruch 6, **dadurch gekennzeichnet, dass** die Schienen (23, 24) so ausgebildet sind, dass diese die radiale und/oder winkelmäßige Verschiebung der Schwenkachse (15) antreiben können, die an ihrem Kreuzungspunkt gefangen ist.

8. Dach (1) nach einem der Ansprüche 1 bis 7, **dadurch gekennzeichnet, dass** dieses hintere Mittel zum Antrieb und zur Führung (14) umfasst, die einerseits mit dem hinteren zentralen Element (10) und andererseits mit den hinteren Seitenelementen (11) verbunden sind.

9. Dach (1) nach Anspruch 8, **dadurch gekennzeichnet, dass** die hinteren Mittel zum Antrieb und zur Führung (14) durch zwei seitliche Schienensysteme (14) gebildet sind.

10. Dach (1) nach Anspruch 9, **dadurch gekennzeichnet, dass** jedes Schienensystem (14) durch einen Läufer (20) gebildet wird, der mit dem hinteren Zentralelement (10) fest verbunden ist und der entlang einer Schiene (21) verschieblich angebracht ist, die fest mit dem korrespondierenden hinteren Seitenelement (11) verbunden ist.

11. Dach (1) nach Anspruch 10, **dadurch gekennzeichnet, dass** sich jede Schiene (21) im Wesentlichen entlang der Längsrichtung des Fahrzeugs erstreckt, wenn sich das Dach (1) in seiner entfalteten Position befindet.

12. Dach (1) nach Anspruch 11, **dadurch gekennzeichnet, dass** sich jede Schiene (21) ebenfalls in einer vertikalen Richtung erstreckt, wenn sich das Dach (1) in seiner entfalteten Position befindet, um eine Form zu haben, in welcher sich der mittlere Bereich, wenn sich das Dach (1) in seiner entfalteten Position befindet, im Wesentlichen horizontal erstreckt, das vordere Ende nach unten gebogen ist und das hintere Ende nach oben gebogen ist.

13. Dach (1) nach Anspruch 8, **dadurch gekennzeichnet, dass** die hinteren Mittel zum Antrieb und zur Führung (14) durch zwei hintere Stangen (25) gebildet werden, wobei jede hintere Stange (25) drehbar montiert ist einerseits an einem Seitenelement (11) und andererseits an einem zentralen Element (10).

14. Dach (1) nach Anspruch 8, **dadurch gekennzeichnet, dass** die vorderen Mittel zum Antrieb und zur Führung (13) oder die hinteren Mittel zum Antrieb und zur Führung (14) Schienen (22, 23, 24) umfassen, die so ausgebildet sind, dass diese die Verschiebung der Seitenelemente (11) in Bezug zum Zentralelement (10) führen.

15. Dach (1) nach Anspruch 14, **dadurch gekennzeichnet, dass** die Schienen (22, 23, 24), die so ausgebildet sind, dass diese die Verschiebung eines der Seitenelemente (11) führen, anders ausgebildet sind als die Schienen (22, 23, 24), die dazu ausgelegt sind, die Verschiebung eines weiteren der Seitenelemente (11) zu führen.
